## Europäisches Patentamt
## European Patent Office
## Office européen des brevets

(19)

(11) Numéro de publication: **0 145 651**
**A2**

(12) **DEMANDE DE BREVET EUROPEEN**

(21) Numéro de dépôt: **84810493.1**

(22) Date de dépôt: **09.10.84**

(51) Int. Cl.⁴: **G 06 K 11/06**, G 01 B 7/00

(30) Priorité: **12.10.83 CH 5563/83**

(43) Date de publication de la demande: **19.06.85**
**Bulletin 85/25**

(84) Etats contractants désignés: **AT BE CH DE FR GB IT LI NL SE**

(71) Demandeur: **BATTELLE MEMORIAL INSTITUTE, 7 route de Drize, CH-1227 Carouge/Genève (CH)**

(72) Inventeur: **Mizzi, François, 16, avenue des Gressets, F-78170 La Celle Saint Cloud (FR)**
Inventeur: **Belion, Jean-Louis, 6, rue de Mizon, F-75015 Paris (FR)**

(74) Mandataire: **Dousse, Biasco et al, 7, route de Drize, CH-1227 Carouge/Genève (CH)**

(54) **Dispositif pour former des signaux caractéristiques de la position d'un point déterminé sur une surface.**

(57) Le dispositif comprend deux substrats superposés (1 et 5) portant chacun un réseau de pistes conductrices orthogonales (2 et 6), se faisant face, de réseau à réseau, et maintenues distantes par des entretoises d'espacement (4). Les pistes de chaque réseau sont rattachées à des résistances linéaires ($R_{AX}$ et $R_{AY}$) destinées à être reliées simultanément, l'une, à un potentiel continu de référence et, l'autre, à un capteur de potentiel, et vice versa. Ce capteur pourra ainsi recevoir des signaux analogiques caractéristiques de la position de tout point du substrat (5), qui est formé par une membrane souple, sur lequel aura été exercée une pression mettant au moins une piste (6) du réseau associé à ce substrat (5) en contact avec une piste (2) appartenant au réseau associé à l'autre substrat (1).

- 1 -                                    0145651

<u>DISPOSITIF POUR FORMER DES SIGNAUX CARACTERISTIQUES</u>

<u>DE LA POSITION D'UN POINT DETERMINE SUR UNE SURFACE</u>

La présente invention a pour objet un dispositif pour former des signaux caractéristiques de la position d'un point déterminé sur une surface donnée, notamment par pression excercée au droit de ce point.

On connait déjà, notamment du brevet US 4 444 998, un dispositif de ce genre comportant une première membrane, dite statique, en un matériau présentant une résistance ohmique relativement élevée, de forme générale rectangulaire et recouvrant ladite surface de façon uniforme, et une membrane souple, dite dynamique, placée au-dessus de la membrane statique, dont la face située en regard de la membrane dynamique est revêtue d'une couche conductrice, cette membrane dynamique étant maintenue par des moyens appropriés à une distance de la membrane statique suffisante pour éviter tout contact intempestif entre son revêtement conducteur et la membrane statique et étant susceptible de reprendre cette position distante lorsqu'elle en a été écartée, par exemple à la suite d'une pression excercée en un point de sa surface, en vue de créer un contact galvanique local entre la membrane dynamique et la membrane statique.

Dans un tel dispositif, les bords de cette dernière membrane sont portés deux à deux à un potentiel continu de référence de sorte que tout point du revêtement conducteur de la membrane dynamique venant en contact avec la membrane statique dans les conditions ci-dessus est lui-même porté à un potentiel correspondant à ce même potentiel de référence diminué de la chute de potentiel enregistrée, dans la membrane statique, entre l'une et l'autre paire de ses bords opposés et ce point de contact. La détermination de la position "géographique" de ce point est effectuée en mesurant séquentiellement, à partir de la membrane dynamique, la valeur de la résistance apparente offerte par la partie de la membrane statique s'étendant entre son point de contact avec la membrane dynamique et l'un ou l'autre des côtés adjacents du bord de cette membrane statique. Cette mesure est rendue possible par la mise en oeuvre de quatre électrodes disposées le long des quatre côtés de la membrane statique, re-

- 2 -                                                    0145651

liées électriquement aux côtés homologues de cette membrane, et par le rattachement alterné de chaque paire d'électrodes s'étendant le long de bords opposés de la membrane statique à des sources distinctes de tension de manière à créer des gradients orthogonaux de potentiel dans cette membrane.

Un dispositif de ce type ne permet toutefois pas de déterminer avec une précision suffisante la position des points de la membrane dynamique touchée par un usager, les erreurs enregistrées pouvant atteindre une valeur de plusieurs centimètres selon les cas. Ce type d'inconvénient découle, en fait, de deux raisons distinctes, inhérentes, l'une, aux différences locales d'homogénéité de l'épaisseur et de la nature chimique du matériau constituant la membrane statique, donc aux différences de la résistance ohmique offerte localement par chaque point de la membrane, l'autre, à la géométrie de cette membrane et des électrodes qui l'alimentent en courant, donnant forcément lieu à une distribution différente des lignes de courant parcourant la membrane, donc à une différence de longueur de ces lignes et de résistance électrique offerte par la membrane, selon la situation du point de contact de la membrane dynamique avec la membrane statique.

L'inconvénient cité ne peut même pas être supprimé en faisant usage de membranes de structure parmi les plus modernes, c'est-à-dire dans lesquelles le revêtement résistif est constitué par une couche d'un oxyde métallique, ultra-mince et transparent, par exemple un oxyde d'indium, un oxyde d'étain ou un mélange des deux.

On sait en effet que même les techniques les plus évoluées de dépôt de tels oxydes, qu'il s'agisse de dépôts obtenus par vaporisation simple ou de ceux issus de la mise en oeuvre de la technique bien connue, mise au point par exemple par la société SIERRACIN CORPORATION, donnent des résultats d'autant moins constants que l'épaisseur des revêtements désirés est très mince, que l'étendue et la vitesse de fabrication de tels revêtements est élevée et, surtout, la qualité de ces revêtements se dégrade dans le temps, par usure mécanique due aux frottements répétés entre les membranes, statique et dynamique, des dispositifs auxquels elles sont intégrées, tout au long de l'utilisation de tels dispositifs.

Le brevet des USA 3 304 612 et la demande de brevet européen 0 054 406 décrivent également des dispositifs fonctionnant de façon similaire au dispositif ci-dessus.

On connaît aussi, du brevet FR 1 537 435, un dispositif du genre cité au préambule, comprenant deux réseaux orthogonaux de pistes équidistantes maintenues en permanence à des potentiels de même valeur mais de signe opposé, appliqués à une première extrémité de chaque piste d'un réseau considéré, la seconde extrémité de ces pistes aboutissant à une "porte" électronique, propre à chaque piste, délivrant un signal d'amplitude caractéristique de la position occupée par cette piste au sein de son réseau lorsque le potentiel de la seconde extrémité de la piste devient nul à la suite d'une mise en contact momentanée de cette piste, dont la première extrémité est à un potentiel de signe donné, avec une autre piste qui lui est orthogonale et qui est, elle, au même potentiel mais d'un signe opposé.

Bien que le principe mis en oeuvre dans ce brevet français permettrait effectivement l'obtention d'une localisation satisfaisante d'un point d'une surface embrassée par deux réseaux de pistes, on comprend qu'un tel dispositif conduirait forcément à une complication structurelle particulièrement dispendieuse s'il devait être appliqué dans un dispositif faisant usage de réseaux aux pistes particulièrement nombreuses, de largeur unitaire et d'espacement très faibles. On imagine en effet aisément le nombre particulièrement élevée de "portes" électroniques et de connections auxquelles il faudrait faire appel pour obtenir le signal analogique souhaité.

Le brevet britannique 1 201 424 concerne un développement ultérieur du dispositif ci-dessus, selon lequel les réseaux orthogonaux de pistes conductrices sont soumis à l'action d'un générateur d'impulsions, alimentant ces réseaux avec des signaux périodiques déphasés dans le temps de réseau à réseau, les pistes occupant une même position, en X et en Y, de réseau à réseau, étant reliées deux à deux à un élément logique propre à chaque piste, demeurant inerte, tant qu'il reçoit des signaux déphasés de la piste X et de la piste Y qui le concernent et émettant un signal de sortie, dès que l'un des deux signaux d'entrée change de nature, notamment parce que l'une ou l'autre des deux pistes du réseau a été portée en contact avec une autre piste de sorte que, à son signal propre, viendra se superposer le signal déphasé parcourant cette autre piste.

La détection des signaux de sortie émis par les deux éléments logiques concernés, devrait, en principe, permettre de déterminer l'identité des deux pistes des deux réseaux portés en contact. Toutefois, si le point à localiser sur lequel a été exercée une pression, mettant en contact réciproque une piste de l'un des réseaux avec une piste de l'autre réseau, présente une ordonnée et une abscisse de même valeur, le dispositif décrit est incapable de localiser ce point parce que, tout en étant différents des signaux périodiques reçus par ces pistes avant leur mise en contact réciproque, les signaux que recevra l'élément logique auquel ces pistes sont reliées seront identiques pour chaque piste et correspondront, sur chacune d'elles, à la superposition des deux signaux originaux, déphasés dans le temps. De ce fait, cet élément logique demeurera "inerte" et rien n'indiquera au circuit d'analyse du dispositif que les deux pistes en question ont été portées en contact. A cet inconvénient, il convient d'ajouter le fait que la structure de ces circuits d'analyse suppose la mise en oeuvre d'une électronique "logique" particulièrement compliquée et coûteuse.

On a également proposé, dans divers brevets américains appartenant à la Société Control Data Corporation et, notamment, dans le brevet américain 4 066 853, un dispositif faisant lui aussi emploi de deux réseaux de pistes conductrices définissant un système de coordonnées orthogonales, ces pistes étant constituées par des revêtements d'un oxyde métallique du genre également utilisé dans la présente invention, pour celles d'un réseau, et par des revêtements d'or, pour les pistes de l'autre réseau. En plus d'une isolation traditionnelle disposée entre les deux réseaux de pistes se faisant face, le dispositif proposé dans ces brevets américains fait emploi d'un revêtement pièzo-résistant interposé entre les réseaux, tel qu'il offre une résistance suffisante pour empêcher normalement tout passage de courant entre les pistes d'un réseau et celles de l'autre réseau, ce passage devenant, par contre, possible dès lors que ce revêtement est soumis localement à une pression d'intensité donnée, entre les pistes de l'un et l'autre réseaux se croisant à proximité de la zone dans laquelle est exercée ladite pression. Comme la valeur du courant susceptible de parcourir les pistes ainsi "reliées" momentanément est évidemment indépendante de la position "géographique" de ces pistes au sein du réseau respectif, le dispositif en question est donc un dispositif à fonctionnement digital. Il suppose donc, à l'instar du dispositif analogique précédemment cité, l'existence d'un nombre particulièrement élevé de connections permettant de brancher les différentes pistes conductrices des deux réseaux de pistes aux "moyens" devant assurer le "balayage" de telles pistes. Un tel inconvénient structurel ne peut être écarté qu'en limitant le nombre de pistes de chaque réseau pour une surface recouverte donnée de sorte que de telles pistes présentent forcément une largeur relativement élevée (de l'ordre de plus d'un cm dans les brevets américains cités) et que la résolution d'un tel dispositif devient alors mauvaise.

En outre, il est évident que les inconvénients mentionnés précédemment et liés aux inhomogénéités en épaisseur et en qualité du revêtement d'oxyde métallique constituant chaque piste sont également sensibles ici, compte-tenu de la largeur élevée de telles pistes et du fait que ces pistes sont destinées à véhiculer un signal en courant, donc particulièrement sensible aux variations de résistivité susceptibles d'exister de piste à piste. Il en est de même en ce qui concerne les inconvénients inhérents à la dégradation dans le temps des pistes conductrices, et plus particulièrement de celles constituées par un revêtement d'un métal précieux, tel l'or, dont on connaît la faible résistance mécanique offerte notamment à l'usure.

Il est encore à remarquer que les moyens de balayage évoqués ci-dessus présentent, eux aussi, une structure relativement complexe et coûteuse.

Le brevet des USA 3 304 612 concerne également un dispositif pour former des signaux caractéristiques de la position d'un point sur une surface, comprenant, par exemple, deux réseaux orthogonaux de conducteurs disposés un par un au fond d'une pluralité de gorges correspondantes ménagées dans une plaque-support en matériau souple, propre à chaque réseau et faisant face à une électrode associée à chaque jeu de conducteurs, électrode constituée par exemple par une feuille métallique mince. Les conducteurs de chaque réseau sont alimentés chacun à un potentiel différent, caractéristique de leur position individuelle au sein du réseau correspondant, grâce à un diviseur de tension associé à chaque réseau de conducteurs.

La position du point de la surface sur laquelle on exerce une pression est ainsi déterminée en mesurant la valeur de la tension apparaissant sur l'une et l'autre électrode du dispositif, à la suite du contact des deux conducteurs appartenant aux deux réseaux du dispositif avec l'électrode respective.

Dans une variante particulière, le dispositif ne présente qu'une électrode placée en sandwich entre les deux réseaux de conducteurs et qui est donc susceptible de coopérer avec l'un ou l'autre de ces réseaux indifféremment. La mesure des coordonnées du point recherché n'est ici pas réalisée simultanément pour les deux coordonnées, comme dans le cas précédent, mais alternativement.

Ce dispositif est, à l'évidence, structurellement très compliqué. En outre, il présente une épaisseur "hors tout" particulièrement importante et fait appel à une ou deux feuilles métalliques, donc opaques, de sorte qu'il est impossible de faire usage d'un tel dispositif notamment à titre de clavier destiné à être positionné au-dessus d'un affichage LCD par exemple appelé à indiquer, à l'usager, les portions du dispositif à actionner pour commander telle ou telle fonction.

Par ailleurs, on voit mal comment l'architecture proposée dans ce brevet pourrait permettre de garantir un fonctionnement irréprochable du dispositif pendant une très grande durée tout en continuant à assurer une précision des résultats optimale.

On connaît également, de la demande de brevet français 80 07160, un dispositif pour former des signaux caractéristiques de la position d'un point sur une surface, comportant deux réseaux orthogonaux de pistes conductrices séparées, de réseau à réseau, par une membrane pièzo-résistive et dans lequel les pistes d'un même réseau sont rattachées, à une extrémité, en divers points d'une résistance calibrée. La position du point recherché, sur lequel est exercée une pression suffisante pour que la résistance électrique de la membrane devienne suffisamment faible pour permettre le passage de courant entre deux pistes des réseaux se croisant à proximité de ce point est obtenue en reliant chaque extrémité des deux résistances à une source de courant d'intensité constante et en mesurant la distribution de ce courant à ces extrémités des résistances. Un circuit électronique assez complexe permet de calculer les coordonnées du point recherché à partir des valeurs des divers courants ci-dessus.

La précision de mesure d'un tel dispositif dépend très fortement des propriétés électriques de la membrane pièzo-résistive et de la matière constituant les pistes conductrices des deux réseaux ainsi que de la constance de telles propriétés sur toute l'étendue de leur surface. En effet, ces éléments sont destinés, par nature, à véhiculer un signal en courant de sorte que toute variation indue de la résistance de passage de ce courant se traduira par une imprécision de mesure. Par ailleurs, ce dispositif, comme le précédent, est opaque, la membrane pièzo-résistive étant en caoutchouc et les pistes conductrices étant formées par des rubans métalliques, par exemple en cuivre.

La présente invention permet d'obvier à l'ensemble des inconvénients cités. Elle vise, de plus, à l'obtention d'un dispositif d'une architecture particulièrement simple permettant, avec un minimum de moyens fiables, une localisation de tout point d'une surface donnée sur lequel on aurait exercé une pression manuelle ou non manuelle, même d'intensité réduite, avec un précision particulièrement élevée, de l'ordre du millimètre ou moins. En outre, cette architecture est avantageusement mais non exclusivement en voie de matériau transparent, de très bonne qualité optique, de sorte que le dispositif selon l'invention est particulièrement adapté pour un usage en position au-dessus d'un dispositif d'affichage, constitué par un tube cathodique ou par un affichage à cristaux liquides par exemple.

A cet effet, la présente invention propose, comme dans certains documents de l'art antérieur, un dispositif pour former des signaux caractéristiques de la position d'un point déterminé sur une surface, notamment par pression, manuelle ou non, exercée au droit de ce point, comportant un premier substrat isolant recouvrant la surface, un premier réseau de pistes conductrices fixées sur une face de ce premier substrat, en position distante les unes des autres, un second substrat, en matériau souple et isolant, recouvrant la face du premier substrat portant lesdites pistes conductrices, un second réseau de pistes conductrices, fixées sur la face du second substrat située en regard du premier réseau de pistes, les pistes de ce se-

0145651

cond réseau étant distantes les unes des autres et s'étendant transversalement aux pistes du premier réseau, des organes maintenant le second substrat dans une position tendue, telle que chaque piste de son réseau demeure éloignée de n'importe laquelle parmi les pistes du premier réseau tant qu'aucune pression n'est exercée sur au moins une zone dudit second substrat, des moyens pour localiser les pistes desdits réseaux portées en contact mutuel lorsque ledit second substrat est soumis à ladite pression.

Le dispositif selon l'invention se caractérise toutefois des dispositifs similaires antérieurs par le fait que les moyens de localisation des pistes portées en contact mutuel comprennent deux diviseurs ohmiques de tension associés, l'un, au premier des deux réseaux de pistes et, l'autre, au second de ces réseaux, chaque piste d'un réseau étant rattachée, par une extrémité, en un point du diviseur respectif tel que la résistance ohmique entre ce point et l'une des extrémités de ce diviseur soit caractéristique de la position occupée par cette piste au sein de son réseau, un premier et un second organes de commutation associés respectivement au premier et au second diviseurs de tension et permettant de rattacher l'une des extrémités du diviseur correspondant soit à une source de potentiel de référence, dans un premier état actif de commutation de chaque organe, soit à un moyen de collection de signaux en potentiel, dans un second état actif de cet organe, un troisième organe de commutation permettant soit de rattacher l'autre extrémité de l'un ou de l'autre diviseur à la masse, soit de l'en séparer, des moyens de commande périodique desdits organes de commutation, agencés de manière telle que, d'une part, chacun desdits premier et second organes de commutation se trouve dans le premier de ses deux états actifs, lorsque l'autre de ces organes est dans le second de ces états, et vice-versa, et tel que, d'autre part, ledit troisième organe rattache à la masse la seconde extrémité de chaque diviseur, lorsque la première extrémité de celui-ci est rattachée à ladite source de potentiel de référence, ce troisième organe interrompant cette liaison à la masse, dans le cas contraire.

Grâce à la structure ci-dessus, à la suite d'une pression exercée en un point quelconque de la surface correspondant à une zone de contact galvanique entre au moins deux pistes appartenant chacune à un réseau distinct, le moyen de collection reçoit, alternativement et en synchronisme avec l'arrivée desdits organes de commutation dans l'un et l'autre états actifs, des signaux en potentiel, d'amplitude caractéristique, successivement en abscisse et en ordonnée, de la position des pistes portées en contact mutuel et, partant, du point de la surface sur laquelle a été exercée la pression.

Ainsi, les deux réseaux de pistes que comprend ce dispositif définissent, en quelque sorte, un système de coordonnées permettant une localisation d'autant plus aisée et précise de tout point du second substrat sur lequel est exercée une pression manuelle suffisante pour produire le contact galvanique des pistes que le nombre de pistes de chaque réseau est élevé, c'est-à-dire que leur largeur et la distance qui les séparent sur le substrat respectif sont réduites. De préférence, de telles pistes auront une largeur de l'ordre de 1 à 2 mm et seront distantes de 1 à 2/10 de mm.

Elles pourront également, en variante, être de largeur inférieure, correspondant par exemple à 0,5 mm, la distance séparant de telles pistes pouvant être relativement importante et atteindre même 1 mm.

Le dispositif selon la présente invention propose donc de mettre en oeuvre un principe nouveau, permettant d'écarter l'ensemble des inconvénients pouvant résulter de défauts éventuels, en qualité et en structure, des revêtements conducteurs formant les pistes. De plus et avantageusement, les inconvénients liés aux moyens à mettre en oeuvre pour procéder tant à l'application d'un potentiel "personnalisé" pour chaque piste considérée de l'un des réseaux qu'à la mesure du potentiel véhiculé par une telle première piste sur une seconde piste de l'autre réseau, portée en contact avec cette première piste, sont supprimés aisément par le fait que les pistes de chaque réseau sont reliées, par une extrémité, en divers points d'un diviseur de tension simple, propre au réseau considéré, telle une résistance de référence présentant une valeur bien déterminée en chaque point, à laquelle correspond un potentiel, lui aussi bien déterminé, qui pourra donc être utilisé pour caractériser la position "géographique" de la piste rattachée à un tel point et, partant, la coordonnée à laquelle correspondra cette piste.

Avantageusement, si les pistes des réseaux sont destinées à former un système de coordonnées rectilignes, orthogonales ou non, les deux résistances en question sont des résistances dont la valeur ohmique croît proportionnellement à leur longueur physique, les pistes associées à chacune de ces résistances étant reliées en des points divers et équidistants de la longueur de telles résistances, de sorte que le potentiel que reçoit chaque piste d'un réseau sera différent d'un même incrément, en plus ou en moins, par rapport au potentiel moyen appliqué aux deux pistes voisines. Chacune de ces résistances de référence peut, de plus, jouer le rôle de collecteur du signal en potentiel véhiculé par n'importe laquelle des pistes conductrices appartenant à un réseau donné qui lui est associé et qui a reçu ce signal de n'importe laquelle des pistes conductrices appartenant à l'autre réseau avec laquelle le contact a été établi par pression manuelle exercée dans la zone d'intersection des deux pistes considérées.

Il suffira, à cet effet, de faire en sorte que chaque résistance de référence soit appelée à jouer alternativement le rôle de diviseur de tension et de collecteur, chacune de ces deux fonctions étant assurée, en des instants déphasés dans le temps, de résistance en résistance.

Pour que la résistance devienne diviseur de tension, on en mettra une extrémité à la masse, ce qui fixera l'origine du système de coordonnées déjà mentionné, et l'autre extrémité à un potentiel continu de valeur maximum déterminée.

Cette même résistance deviendra un collecteur de potentiel en séparant momentanément ses deux extrémités de la masse et de la source de potentiel ci-dessus. Tout système de mesure adéquat, équivalent à un simple voltmètre, permet alors de "lire" la valeur du potentiel véhiculé vers cette résistance, valeur qui est un signal analogique. Bien entendu, un tel signal peut, au besoin, être traduit en une pluralité de signaux binaires susceptibles d'être exploités par un système électronique d'analyse faisant emploi de signaux digitaux.

Selon une autre caractéristique particulièrement avantageuse, et lorsque le dispositif selon l'invention sera plus précisément destiné à être utilisé en combinaison avec un écran constitué par un tube cathodique ou par un affichage à cristaux liquides par exemple, en vue de donner à l'appareil comportant un tel écran des ordres caractérisés par l'emplacement d'informations correspondantes apparaissant en des points divers de l'écran, les substrats porteurs des réseaux de pistes de même que ces pistes seront particulièrement transparentes, les deux résistances de référence pouvant, elles, être en un matériau opaque car elles seront, alors, disposées à l'extérieur du champ visuel de l'écran. Ces résistances pourront être en tout matériau approprié, présentant le caractère de linéarité requis quant à la variation de leur valeur ohmique en fonction de leur longueur: à titre d'exemple, ces résistances pourront être constituées en carbone ou en graphite.

Les pistes conductrices revêtant chacun des deux substrats que comporte le dispositif selon l'invention seront obtenues à partir d'une couche d'oxyde métallique du type déjà cité, d'épaisseur particulièrement faible, de l'ordre de quelques dizaines de microns, et déposée à l'origine sur toute la surface du substrat correspondant. Les pistes elles-mêmes sont obtenues par formation subséquente d'une pluralité de rainures creusées dans toute l'épaisseur du revêtement, dont la largeur correspondra à la distance séparant, et isolant électriquement, deux pistes voisines et dont l'écartement, de rainure à rainure, sera égal à la largeur de chaque piste obtenue, augmentée d'une largeur de rainure. La formation de telles rainures pourra être obtenue de toute façon adéquate et par exemple par attaque chimique locale, par attaque mécanique, par exemple par griffage à l'aide de stylets en matériau très dur, diamant ou carborundum par exemple, ou encore par intervention d'un faisceau laser. On peut, en variante, faire emploi de toute autre technique adéquate et en particulier procéder au dépôt individuel des pistes conductrices au travers d'un masque dont les portions opaques permettront l'obtention des rainures séparant les pistes. Quel que soit le moyen employé, on veillera évidemment à ce que les bords longitudinaux de chaque piste soient aussi réguliers que possible.

Bien entendu, l'invention peut être mise en oeuvre de même façon, que les pistes conductrices de chaque réseau soient rectilignes ou courbes, la coordonnée à laquelle correspond chaque piste étant fixée par la zone de la résistance de référence à laquelle la piste a été reliée, mécaniquement et galvaniquement, et donc à la valeur ohmique de la section de cette résistance comprise entre son extrémité et ladite zone.

Pour que le contact galvanique entre une ou plusieurs pistes des deux réseaux de pistes ne revête qu'un caractère momentané tant que la zone considérée des substrats respectifs demeure soumise à une pression manuelle, le second substrat du dispositif selon l'invention est constitué par une membrane dynamique, formée par une feuille transparente de polyesther ou de polycarbonate présentant une épaisseur de l'ordre du dizième de millimètre et qui est donc relativement élastique. Entre cette membrane dynamique et l'autre substrat (la membrane statique) qui est généralement d'épaisseur très supérieure, celle-ci pouvant en effet être constituée par une feuille de plexiglas de 1 à 2 mm d'épaisseur, selon les cas, sont placées des entretoises en résine polyesther relativement dure, de forme générale cubique, dont les arêtes présentent une longueur de 0,5 mm environ. Ces entretoises sont formées et collées, par exemple par sérigraphie, directement sur les pistes revêtant la membrane statique à une distance d'environ 5 mm l'une de l'autre et selon une disposition en rangs et files orthogonales, chaque quatre entretoises soutenant ainsi une portion carrée élémentaire de la membrane dynamique de 5 mm de côté par l'intermédiaire des pistes de cette membrane avec lesquelles ces entretoises sont en contact. Ainsi, la distance séparant les pistes de la membrane dynamique des pistes de la membrane statique est-elle de 0,5 mm, c'est-à-dire très réduite.

Il est donc facile de produire manuellement un fléchissement local d'une telle membrane qui soit suffisant pour porter la portion de la ou des pistes intéressées par ce fléchissement en contact avec les pistes de la membrane statique leur faisant face. Comme cependant la membrane dynamique est dans un état légèrement tendu et parce qu'elle prend appui sur la membrane statique par l'intermédiaire d'une pluralité d'entretoises, un tel fléchissement n'est possible, entre les entretoises, qu'en produisant une déformation élastique locale et momentanée, de la membrane dynamique. Cette membrane reprendra donc son état premier en redevenant uniformément distante de la membrane statique, dès qu'aura cessé la pression manuelle qui avait été l'objet de sa déformation locale: il en découle que les pistes conductrices de chaque membrane, qui avaient été portées en contact mutuel par fléchissement de la membrane dynamique, reprendront elles aussi leur position distante de sorte que le signal en potentiel qui aura pu être véhiculé lors de ce contact sera alors interrompu.

L'invention sera mieux comprise en se référant aux dessins annexés, donnés à titre d'exemple, dans lesquels:

La fig. 1 est une vue explicative illustrant certains défauts des dispositifs antérieurs;

la fig. 2 est une vue en plan montrant certaines particularités du dispositif selon l'invention;

la fig. 3 est une vue en coupe, à plus grande échelle, selon III-III de la fig. 2;

la fig. 4 est une vue en plan, avec arrachement partiel d'un dispositif selon l'invention;

la fig. 4a représente un schéma électrique;

la fig. 5 est une coupe selon V-V de la fig. 4, à plus grande échelle.

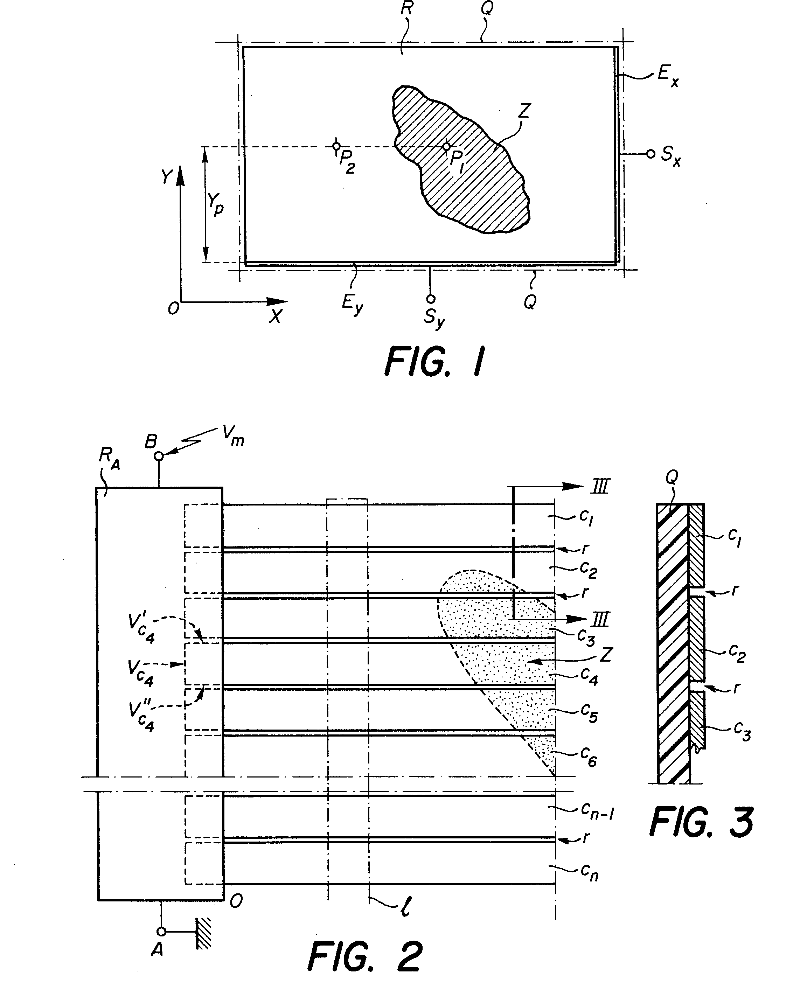

Au dessin (fig. 1), R représente un revêtement en oxyde métallique, par exemple un oxyde d'indium, un oxyde d'étain ou un mélange de ces oxydes, déposé en couche mince, de l'ordre de quelques dizaines de microns par exemple, sur un substrat indiqué schématiquement par un rectangle en trait mixte Q, substrat qui est en matériau isolant, tel que verre ou matière plastique, par exemple un polycarbonate.

Le long de deux bords adjacents de ce revêtement R sont disposées deux électrodes $E_x$ et $E_y$ en contact galvanique avec le revêtement lui-même et destinées au prélèvement du signal en courant susceptible de se propager dans le revêtement R dès qu'on lui applique un potentiel donné en un de ses points $P_1$ ou $P_2$, de même ordonnée $Y_p$ au dessin. Ce signal peut être prélevé sur une borne $S_x$, pour l'électrode $E_x$, et sur la borne $S_y$, pour l'électrode $E_y$.

La structure qui vient d'être décrite reflète, très schématiquement, le principe selon lequel travaille l'un des dispositifs connus cité précédemment, à savoir la localisation d'un point $P_1$ ou $P_2$ par la mesure successivement au niveau de l'électrode $E_x$, pour les abscisses en X, et au niveau de l'électrode $E_y$, pour les ordonnées en Y, de la chute de potentiel due à la résistance ohmique offerte par le revêtement R au passage du courant, de $P_1$ ou de $P_2$, en direction de l'électrode $E_x$ et en direction de l'électrode $E_y$.

Or, dans une telle structure, la mesure de l'ordonnée $Y_p$ des points $P_1$ et $P_2$, dont la valeur devrait être identique de point à point, donne généralement lieu à des résultats assez différents pour chacun d'eux parce que la distribution gaussienne du champ électrique s'établissant dans le revêtement R n'est évidemment pas la même pour le point $P_1$ et pour le point $P_2$ compte tenu des différences de position de chaque point, dans la direction X, par rapport aux deux bords verticaux du revêtement R. Ces différences pourraient, théoriquement, être plus ou moins corrigées lors de l'évaluation des résultats de la mesure par établissement préalable de tables tenant précisément compte de la géométrie particulière du revêtement R et de l'emplacement respectif des points $P_1$ et $P_2$. En pratique, on s'aperçoit toutefois que l'erreur de mesure qui devrait pouvoir être ainsi corrigée est assez variable, voire imprévisible, si on compare les performances obtenues en procédant à un test comparatif de plusieurs structures du genre illustré, identiques quant à leur architecture générale et à leurs dimensions propres. C'est que, malgré les progrès réalisés à ce jour en matière de maintien de la régularité d'épaisseur et de qualité du revêtement d'oxyde métallique pendant toute la durée d'exécution du processus de fabrication en continu d'une grande quantité de substrat revêtu d'un tel oxyde, dont la portion utilisée par la suite pour chaque structure (telle celle de la fig. 1) sera proportionellement très réduite, il est à ce jour impossible de garantir que l'épaisseur du revêtement obtenu et son homogénéité du point de vue chimique, notamment lorsque l'oxyde métallique en question est, en fait, un mélange de plusieurs oxydes, soient rigoureusement constantes à chaque instant.

Il s'ensuit que, malgré tout le soin apporté lors des opérations de dépôt de l'oxyde métallique sur son substrat, ce dépôt peut être, par place, de caractéristiques différentes du dépôt optimum désiré.

Un substrat tel le substrat Q au dessin peut donc, fort bien, être recouvert d'un revêtement d'oxyde dont les caractéristiques s'écarteront de la "normale", par exemple dans la zone Z. De ce fait, tant la résistivité intrinsèque de l'oxyde métallique de cette zone que, éventuellement, l'épaisseur de cet oxyde, et donc la résistance électrique par unité de surface de l'oxyde, seront de valeur souvent suffisamment différente pour que le signal en courant susceptible d'être reçu par les électrodes $E_x$ et $E_y$ diverge, dans une très grande mesure, de celui qu'il aurait dû être si le revêtement R avait été identique, en épaisseur et en qualité, sur toute l'étendue de sa surface. Comme, par ailleurs, tant l'étendue d'une zone telle la zone Z citée que sa forme et sa localisation sur le substrat Q présentent évidemment un caractère aléatoire, il est évident que l'impact de l'existence de telles zones pourra être très différent d'une structure telle celle de la fig. 1 à une autre structure similaire, même appartenant à un seul lot de fabrication de telles structures.

Ainsi, quels que puissent être les moyens mis en oeuvre pour compenser des erreurs de mesure inhérentes à la forme géométrique du revêtement et à la position du point, $P_1$ ou $P_2$, dans ce revêtement, la mesure susceptible d'être réalisée à partir du signal obtenu sur les bornes $S_x$ et $S_y$ sera forcément entachée d'une erreur, elle aussi à caractère aléatoire.

Il n'existe, à ce jour, pas de moyens permettant d'écarter sérieusement cet inconvénient majeur dans le cadre d'une utilisation d'un revêtement d'oxyde métallique à titre de véhicule de courant.

La présente invention envisage précisément de faire travailler des revêtements de ce type essentiellement à titre de véhicules de potentiel et, de ce fait, de réduire, au minimum, et l'intensité et l'étendue de la zone d'influence effective de tout courant, généralement de nature parasitaire, susceptible de parcourir les revêtements d'oxydes métalliques en question.

A cet effet, il est proposé de remplacer le revêtement uniforme R de la fig. 1 par un revêtement fractionné tel celui qui est visible aux figs 2 et 3 et qui est constitué par une pluralité de pistes conductrices horizontales, $c_1$ à $c_n$, présentant une largeur particulièrement réduite, de l'ordre de 1 mm par exemple, et séparées deux à deux par une rainure _r_ (figs 2 et 3), très étroite, de 0,1 mm de largeur notamment. Comme on le voit au dessin (fig. 3), le fond de ces rainures _r_ est constitué en fait par une portion du substrat Q de sorte que les différentes pistes conductrices $c_1$ à $c_n$ forment ainsi un réseau de pistes parfaitement isolées les unes des autres.

Ces pistes et ces rainures peuvent être obtenues, comme déjà décrit, par exemple par un traitement de surface approprié, chimique, mécanique ou par laser, d'une couche d'oxyde métallique recouvrant de façon uniforme l'ensemble de la surface d'un substrat tel le substrat Q, traitement permettant d'assurer une parfaite régularité de la largeur de chaque piste sur toute sa longueur, de la largeur de la rainure $\underline{r}$ comprise entre deux pistes adjacentes et de l'état de surface des bords longitudinaux de chaque piste se présentant relativement plans, sans aspérités notables même au niveau microscopique.

Comme on le voit à la fig. 2, le fait de subdiviser le revêtement uniforme de la fig. 1 en fines pistes se traduit par une répartition fractionnée entre toutes les pistes intéressées de toute zone Z d'irrégularité dans la qualité et/ou l'épaisseur du revêtement d'oxyde. On verra, ci-après, les avantages essentiels qu'on pourra tirer d'un tel fractionnement.

Les diverses pistes $c_1$ à $c_n$ sont rattachées à leur extrémité gauche à une résistance $R_A$ dont la valeur ohmique croît linéairement sur toute sa longueur. Une telle résistance pourra être constituée, comme déjà indiqué, par une couche de carbone, déposée sous forme de peinture sur le substrat Q après formation des pistes conductrices de manière à recouvrir une zone de ces pistes suffisante pour assurer un contact homogène sur toute la hauteur de chaque piste. Le revêtement de cette couche de carbone pourra avoir une largeur d'environ 2 mm. Au dessin, cette largeur n'a pas été représentée à l'échelle pour faciliter la compréhension de l'invention. De même, la longueur de cette résistance est choisie en pratique de façon telle que ses deux extrémités affleurent pratiquement le bord inférieur de la piste $c_n$ et le bord supérieur de la piste $c_1$.

Avec une telle structure élémentaire, il sera ainsi possible de polariser chaque piste $c_1$ à $c_n$ avec un potentiel différent qui sera caractéristique de l'emplacement de la piste considérée à l'intérieur du réseau de pistes qu'elles forment. Plus précisément, en mettant la résistance $R_A$ à la masse par sa borne A et en appliquant un potentiel continu $V_{max}$ sur la borne B, la résistance $R_A$ fonctionnera, pour chaque piste $c_1$ à $c_n$, comme un diviseur de tension tel que la ligne moyenne de chaque piste sera portée à un potentiel continu correspondant à celui existant sur la résistance $R_A$ au niveau de cette ligne.

Comme la valeur ohmique de cette résistance croît linéairement de la borne A à la borne B, la valeur du potentiel existant au niveau de la ligne moyenne de chaque piste croîtra, elle-aussi, linéairement de bas en haut, au dessin.

Les pistes étant, à la fois, équidistantes et de même largeur, le potentiel continu "moyen" de chaque piste sera donc différent du potentiel continu moyen des pistes voisines d'une même valeur incrémentale, en plus ou en moins, selon que l'on se réfèrera à la piste immédiatement en dessous ou en dessus de chaque piste considérée.

Par ailleurs, si l'on considère chaque piste prise pour elle-même, on s'aperçoit que, si sa ligne moyenne est portée à un potentiel donné, par exemple $V_{c4}$, pour la piste $c_4$, les bords supérieur et inférieur de cette piste sont à des potentiels différents de $V_{c4}$, d'une quantité en plus et en moins, proportionnelle à la différence de la valeur ohmique de la résistance $R_A$ par rapport à la borne A qui existe au niveau du bord supérieur et du bord inférieur de la piste $c_4$. Si $V'_{c4}$ est le potentiel continu mesurable le long de ce bord supérieur et $V''_{c4}$ est le potentiel continu mesurable le long du bord inférieur, on aura forcément

$$V'_{c4} > V_{c4} > V''_{c4}$$

Ces deux bords de la piste $c_4$ sont donc des équipotentielles de potentiel $V'_{c4}$, pour l'une, et $V''_{c4}$, pour l'autre.

Par ailleurs, compte tenu de ce que la largeur de cette piste, comme d'ailleurs de toute autre piste, au dessin, est très faible, de l'ordre de 1 à 2 mm, les équipotentielles existant dans la piste $c_4$ seront toutes parallèles aux bords longitudinaux de la piste elle-même et régulièrement espacées, sauf peut-être dans la partie de la zone Z concernée par l'extrémité droite de cette piste. Cette partie de zone étant d'étendue réduite, le trouble qui pourrait résulter de cette inhomogénéité est pratiquement négligeable parce que, de plus, la différence de potentiel entre les deux bords longitudinaux de la piste $c_4$ est de faible valeur et que, en conséquence, le courant susceptible de circuler entre ces deux bords sera lui-même très faible.

A titre d'exemple, pour un assemblage de pistes horizontales $c_1$ à $c_n$ de 82 unités, donc présentant une hauteur totale d'environ 90 mm, soumis, dans les conditions citées, à un potentiel continu $V_m$ de 5 volts, la différence de potentiel entre les bords longitudinaux de chaque piste est de $6.10^{-2}$ volts. Le courant auquel elle peut donner naissance est donc tellement faible que l'importance éventuelle de l'erreur résultant de son passage dans la portion de la zone Z intéressant la piste $c_4$ devient négligeable.

Bien entendu, ce qui a été dit en se référant exclusivement à la piste $c_4$ est également valable, mutatis mutandis, pour chaque autre piste du réseau de la fig. 2.

Compte tenu de ce qui vient d'être indiqué, si on complète l'agencement de la fig. 2 par l'adjonction d'une lamelle souple et isolante, telle la lamelle 1, représentée en traitillé, s'étendant verticalement et recouverte sur une face d'un revêtement d'oxyde métallique similaire à celui des pistes $c_1$ à $c_n$ et si on garde cette lamelle à distance mais toutefois suffisamment proche de ces pistes pour pouvoir être mise en contact par flexion locale de cette lamelle, chaque portion de son revêtement faisant face successivement aux diverses pistes $c_1$ à $c_n$, alors on peut mesurer, par exemple par un voltmètre branché à l'extrémité inférieure de la lamelle 1, les divers potentiels auxquels sont portées les pistes $c_1$ à $c_n$ grâce à la résistance $R_A$. Ainsi, si la lamelle 1 est à une distance X connue, du point O, par l'obtention sur cette lamelle d'un potentiel de valeur correspondant à la position de la piste $c_1$ à $c_n$ avec laquelle cette lamelle est en contact, on connaît de plus l'ordonnée Y de la piste considérée, par rapport à ce même point O, de sorte que la zone de contact de cette piste avec la lamelle est ainsi parfaitement bien définie.

Il convient, à ce point, de signaler que lors de la mesure du potentiel sur la lamelle 1, par exemple à l'extrémité inférieure de celle-ci, il ne circule pratiquement pas de courant, aux courants de fuite et de mesure près, ni dans la piste $c_1$ à $c_n$ considérée, ni dans la lamelle 1 elle-même de sorte que l'influence néfaste qu'aurait pu produire par exemple une quelconque irrégularité du revêtement d'oxyde des pistes $c_1$ à $c_n$ est totalement écartée. En effet, en plus du fait que l'appareil devant mesurer la valeur du potentiel est, par nature, hautement résistif, on relèvera que les pistes $c_1$ à $c_n$ présentent, elles-aussi, une résistance de valeur ohmique importante puisque celle-ci peut être comprise entre environ 6 KOhms, pour une piste $c_1$ à $c_n$ de 190 mm de longueur ayant de bonnes qualités de transparence, et environ 46 KOhms, pour une piste similaire de qualités optiques inférieures. On signalera, à ce propos, que la valeur de la résistance carrée de ces types de revêtements est environ de 300 Ohms, dans le premier cas, et de 800 Ohms, dans le second. A la résistance ohmique de toute piste $c_1$ à $c_n$ devenue active, il faut évidemment encore ajouter celle du revêtement de la lamelle $\underline{1}$. En effet, en ce qui concerne plus précisément cette lamelle, dont la longueur est de 90 mm environ, sa résistance ohmique, dans les deux hypothèses précédentes, sera elle aussi élevée puisqu'elle atteindra environ 3 KOhm dans la première hypothèse, et environ 22 KOhm, dans la seconde.

Par extension de ce qui vient d'être illustré, on voit que, en faisant usage de deux systèmes tels celui de la fig. 2 disposés l'un au dessus de l'autre mais orientés l'un perpendiculairement à l'autre, de manière que les pistes respectives soient légèrement distantes de substrat en substrat mais toutefois susceptibles d'être portées individuellement en contact avec une ou plusieurs pistes de l'autre substrat de la façon décrite en se référant à la lamelle $\underline{1}$ de la fig. 2, on crée un véritable système de coordonnées orthogonales permettant la localisation, horizontalement et verticalement, de toute zone du système dans laquelle on a établi le contact entre les pistes déposées sur des substrats différents. On verra, ci-après, comment le dispositif selon l'invention permet de procéder successivement à la mesure de la coordonnée en X et à la mesure de la coordonnée en Y de tout point du système sur lequel on a permis la liaison galvanique de deux pistes orthogonales.

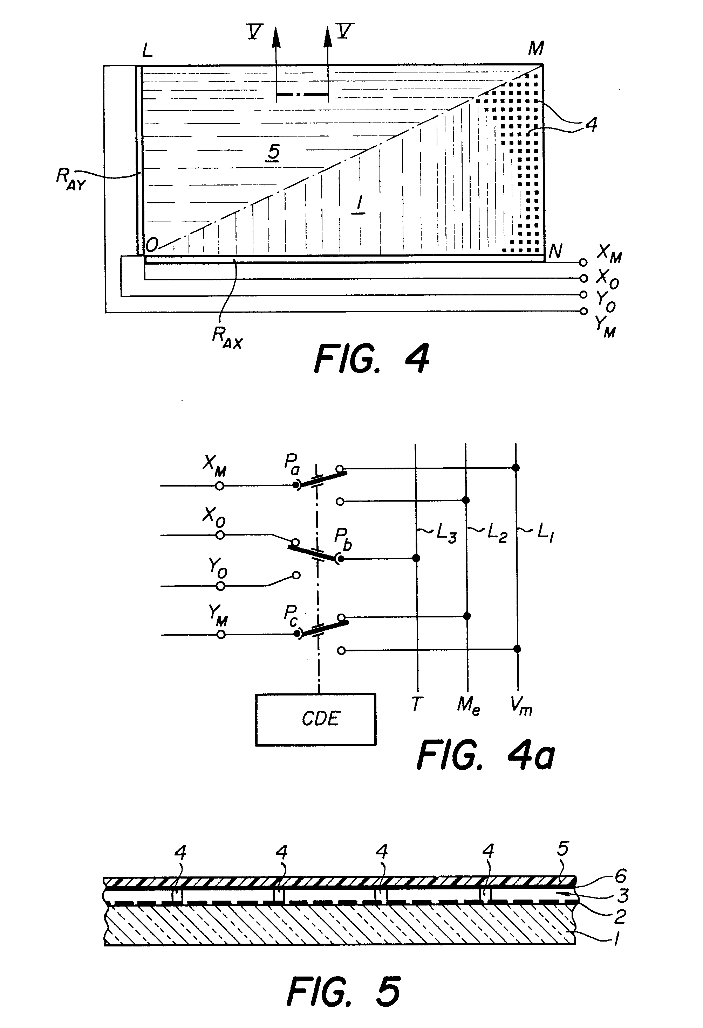

La figure 4 montre précisément une vue en plan, avec arrachement partiel, d'un tel dispositif destiné à être appliqué au-dessus d'un display rectangulaire, par exemple un display à cristaux liquides LCD que le dispositif est appelé à recouvrir en totalité.

Ce dispositif comprend une membrane statique 1, par exemple formée par une feuille de plexiglas d'environ 2 mm d'épaisseur, constituant le substrat sur lequel a été déposée une pellicule d'un oxyde métallique tel l'oxyde d'indium, l'oxyde d'étain ou un mélange de ces oxydes, pellicule qui a été découpée par la suite de la manière décrite précédemment en une pluralité de pistes conductrices verticales 2 dont l'épaisseur est de l'ordre de 10 à 20 microns et dont la largeur, qui est uniforme pour toutes les pistes, est d'un millimètre environ. Des rainures 3, d'un dizième de millimètre de largeur, séparent et isolent chaque piste 2 de celles qui lui sont immédiatement voisines. Sur la fig. 4, tracée à une échelle relativement réduite, les pistes 2 n'ont pas toutes été dessinées et sont représentées par quelques traits verticaux. Elles s'étendent, en réalité, sur toute la hauteur de la membrane 1 qui est, comme on le voit, de forme rectangulaire et est délimitée au dessin par le rectangle L M N O. Dans le cas d'espèce, ce rectangle présenterait en réalité une longueur LM ou NO de 190 mm et une largeur OL ou NM de 90 mm environ. Toutes les pistes portées par la membrane statique 1 sont solidaires et reliées galvaniquement par leur revêtement d'oxyde propre à une résistance linéaire $R_{AX}$ constituée par une couche de carbone ou de graphite d'environ 1,2 mm de largeur, déposée par exemple par sérigraphie, et présentant une résistance de valeur globale relativement élevée, de l'ordre d'une trentaine de KOhms par exemple. Les extrémités droite et gauche au dessin de la résistance $R_{AX}$ sont rattachées à deux bornes, $X_m$ pour la première extrémité et $X_0$ pour la seconde, par l'intermédiaire de connexions de très basse résistance, par exemple en argent, de manière que, en portant la borne $X_m$ à un potentiel continu donné $V_M$, par exemple de 5 Volts, tout en mettant la borne $X_0$ à la masse T, la chute de tension due à ces connexions soit négligeable et que pratiquement toute la différence de potentiel existant entre ces bornes se retrouve aux deux extrémités de la résistance $R_{AX}$.

Le dispositif représenté comporte de plus une myriade d'entretoises d'espacement 4 représentées par des petits points sur la partie inférieure droite du rectangle L M N O de la fig. 4 et qui sont constituées chacune par un petit cube de 0,5 mm de côté, en résine polyester. Ces entretoises ont été déposées par sérigraphie sur les pistes conductrices 2 de la membrane statique 1, alignées en files et en rangs orthogonaux présentant un écartement, de file à file ou de rang à rang, de 5 mm environ.

Les entretoises 4 sont destinées à soutenir une membrane dynamique 5 également de forme rectangulaire, de préférence en matériau plastique transparent, souple et relativement élastique, par exemple un polyester ou un polycarbonate, d'une épaisseur de l'ordre de 1/10 de mm, et dont la face inférieure au dessin (fig. 4) est revêtue par une pluralité de pistes conductrices 6 présentant une largeur, une épaisseur et une composition chimique identiques, en tous points, à celles des pistes 2 déjà citées et obtenues, comme ces pistes, en ménageant, dans un revêtement conducteur uniforme, une pluralité de rainures de 0,1 mm environ de largeur.

Au dessin (fig. 4), seules quelques pistes 6 ont été représentées par des traits horizontaux bien que, en réalité, ces pistes couvrent toute la membrane dynamique 5, en position serrée l'une près de l'autre, de la manière représentée schématiquement aux figures 2 et 3.

Comme on le voit sur la fig. 5, les entretoises 4 sont en contact, par leur surface supérieure, avec une piste 6 de la membrane dynamique 5. On signalera que cette piste 6, de même que toutes les pistes similaires faisant saillie sur la face inférieure de la membrane 5, s'étend parallèlement aux côtés longitudinaux LM et ON du rectangle L M N O de la fig. 4, sur toute la longueur de ce rectangle. Compte tenu, d'une part, de la distance séparant chaque file horizontale d'entretoises 4 et, d'autre part, de la largeur des pistes 6, seule une piste 6 toutes les cinq sera donc supportée par les entretoises 4.

A l'instar des pistes 2 recouvrant la membrane statique 1, les pistes 6 sont réunies mécaniquement et élastiquement, à leur extrémité gauche au dessin, en des points équidistants d'une seconde résistance linéaire $R_{AY}$, de mêmes caractéristiques structurelles que celles de la résistance $R_{AX}$ déjà citée mais de valeur ohmique proportionnellement plus faible, soit d'environ 16 KOhms, puisque sa longueur est plus réduite, de l'ordre de 90 mm. L'extrémité inférieure de cette résistance et son extrémité supérieure sont réunies, par des connexions à basse résistance ohmique, par exemple en argent, respectivement à des bornes $Y_0$ et $Y_M$, cela également de manière que toute la différence de potentiel susceptible d'être appliquée entre ces bornes se retrouve sur la résistance $R_{AY}$.

Comme on le voit au dessin, les résistances $R_{AX}$ et $R_{AY}$, qui sont généralement opaques, s'étendent à l'extérieur du champ L M N O embrassé par les pistes 2 et 6 du dispositif. Il en est de même des connexions reliant ces résistances aux bornes $X_0$, $X_M$, $Y_0$ et $Y_M$ qui, au surplus, ne sont qu'au nombre de quatre pour un nombre de pistes conductrices, verticales et horizontales, particulièrement élevé sans que cela amène de complications au niveau structurel du dispositif représenté. Si un tel dispositif est destiné à être placé dans un boîtier dont il doit constituer une fenêtre d'observation délimitée par un cadre opaque entourant les bords L M N O du champ des pistes 4 et 6, par exemple comme dans le cas de l'ordinateur portatif décrit dans la demande EP 0 053 061, on voit que tant les résistances $R_{AX}$ et $R_{AY}$ que leurs connexions respectives pourront être placées aisément sous ce cadre de boîtier, cadre dont la largeur pourra, du reste, être particulièrement étroite.

Comme on va le voir, le nombre réduit de telles connexions est malgré tout suffisant pour permettre une localisation particulièrement précise de tout point situé dans le champ L M N O sur lequel on aura exercé une pression manuelle apte à porter en contact une piste de la membrane dynamique 5 avec la piste de la membrane statique 1 s'étendant notamment au droit du point ci-dessus.

Il suffit, à cet effet, de compléter le dispositif de la fig. 4 par un circuit du genre de celui de la fig. 4a auquel il peut être branché au travers des bornes $X_M$, $X_0$, $Y_0$ et $Y_M$. Il convient, à ce point, de signaler que ce circuit a été représenté ici sous son aspect purement fonctionnel et qu'il est évident, pour l'homme du métier, de le réaliser sous une forme électronique plus évoluée. Un tel circuit devra cependant comporter trois portes $P_a$, $P_b$ et $P_c$, représentées ici par des interrupteurs bipolaires, susceptibles d'être actionnés en synchronisme et périodiquement par tout moyen électronique approprié, équivalent fonctionnellement au système électromécanique CDE représenté et faisant basculer simultanément les trois portes dans l'une ou l'autre de leurs deux positions limites de branchement. Dans le cas d'une exécution électronique des éléments Pa, Pb, Pc et CDE, la commutation des trois portes pourrait, par exemple, avoir lieu tous les 1/16 de sec.

Comme on le voit, la borne $X_M$ peut être reliée par la porte $P_a$ alternativement à une ligne $L_1$, reliée à une source non représentée de potentiel continu $V_M$, et à une ligne $L_2$, aboutissant à un capteur de potentiel, lui aussi, non représenté mais indiqué par la référence $M_e$. Lorsque le dispositif décrit est destiné à assurer la commande d'un appareil électronique d'analyse, faisant emploi de signaux digitaux, un tel capteur englobe un circuit transformant la valeur absolue du potentiel perçu sur la ligne $L_2$ en valeur relative par rapport au potentiel maximum $V_M$ de la ligne $L_1$, et un transducteur codant cette valeur relative, qui est une valeur analogique, en une valeur digitale.

De façon analogue, la borne $Y_M$ peut être reliée, par la porte $P_c$ alternativement à la ligne $L_2$ et à la ligne $L_1$, aux mêmes fins que celles exposées ci-dessus. On remarquera toutefois que les liaisons établies entre les plots de sortie de la porte $P_c$ et les lignes $L_1$ et $L_2$ sont branchées à l'envers des liaisons rattachant les plots de sortie de la porte $P_a$ et ces mêmes lignes $L_1$ et $L_2$. Il s'ensuit que, lorsque la borne $X_M$ sera rattachée à la ligne $L_1$, la borne $Y_M$ sera au contraire rattachée à la ligne $L_2$, et réciproquement. En ce qui concerne les bornes $X_0$ et $Y_0$ des résistances $R_{AX}$ et $R_{AY}$, elles peuvent être branchées, par la porte $P_b$, alternativement sur la ligne $L_3$ qui est rattachée à la masse T.

En se référant à nouveau au dessin de la fig. 4, on voit que, lorsque la résistance $R_{AX}$ ou $R_{AY}$ est reliée à la ligne $L_1$ par la porte $P_a$ ou $P_c$ à laquelle est branchée sa borne $X_M$ ou $Y_M$, alors cette même résistance est mise à la masse par son autre borne $X_0$ ou $Y_0$. Le potentiel de l'autre résistance n'est défini, pendant ce temps, que par la valeur du potentiel susceptible de lui être imposé par l'une ou l'autre piste auxquelles elle est rattachée, c'est-à-dire seulement par la ou les pistes du réseau correspondant qui sont en contact avec une ou plusieurs pistes appartenant à l'autre réseau dont la résistance $R_{AX}$ ou $R_{AY}$ est momentanément rattachée aux lignes $L_1$ et $L_3$.

Ainsi, grâce à la commutation périodique due au système CDE et chaque fois qu'on exerce une pression manuelle sur un point précis de la membrane dynamique, la ligne $L_2$ reçoit alternativement, par exemple tous les 1/16 de seconde, un signal caractéristique de la position de ce point, selon deux axes orthogonaux parallèles aux pistes des deux réseaux, par rapport à l'extrémité des deux résistances $R_{AX}$ et $R_{AY}$ situées à la hauteur du point O (fig. 4) lequel constitue donc l'origine d'un système de coordonnées permettant une définition exacte de la position du point de la membrane sur lequel agit ladite pression manuelle.

Compte tenu de la largeur relativement réduite des pistes, recouvrant tant la membrane statique que la membrane dynamique, et de leur proximité, il n'est évidemment pas impossible que, en exerçant une pression manuelle sur une faible zone de la membrane dynamique, on réussisse à mettre en contact plus d'une piste de cette membrane avec une, voire deux pistes voisines de la membrane statique. Dans un tel cas, le signal en potentiel que recevra la ligne $L_2$ correspondra alors à un signal de valeur intermédiaire comprise entre les valeurs qu'aurait dû donner chacune des pistes du même réseau de pistes si elle avait été sollicitée de façon individuelle.

Selon une variante d'exécution du dispositif décrit, et aux fins de réduire toute influence de nature capacitive de piste à piste, en particulier pour éviter tous retards dans la production et/ou l'évaluation des signaux en potentiel reçus par la ligne $L_2$ (fig. 4a), les pistes appartenant tant à la membrane statique 1 qu'à la membrane dynamique 5 seront de largeur particulièrement réduite, de l'ordre de 0,5 mm, les rainures séparant chaque piste étant au contraire proportionnellement plus larges, de l'ordre de 1 mm. Ces pistes présenteront toutefois une structure chimique identique à celle décrite en se référant aux figures 2 et 5. Elles pourront être obtenues par les procédés déjà cités.

On signalera encore que, à l'usage, le dispositif décrit s'est révélé être particulièrement fiable, le revêtement d'oxyde métallique constituant chaque piste présentant une résistance à l'usure très élevée. Ces pistes ont en effet continué à assurer un contact électrique satisfaisant, entre pistes de réseaux différents, en tous points du champ embrassé par ces pistes, même après des centaines de milliers de mises en oeuvre du dispositif par sollicitation manuelle exercée chaque fois sur un même point de la membrane dynamique.

Enfin, bien que ni la description qui précède ni les dessins auxquels elle se réfère ne l'aient envisagé spécifiquement, il est évident que la membrane statique 1 (fig. 5) du dispositif selon l'invention peut être formée par une plaque indépendante de l'appareil auquel ce dispositif est destiné à être associé, par exemple dans le cas d'un display à cristaux liquides, mais qu'elle pourrait aussi faire partie intégrante d'un élément de cet appareil, par exemple lorsqu'un tel appareil présente un tube cathodique formant écran vidéo, la membrane statique pouvant être directement constituée par la partie écran d'un tel tube: les pistes conductrices de cette membrane seront alors obtenues par un dépôt d'oxyde métallique effectué sur le tube même.

L'invention n'est bien entendu pas limitée à ce qui a été représenté ou décrit: en particulier, on comprendra que le dispositif en question pourrait être tel que les pistes des membranes statiques et dynamiques ne se coupent pas de façon orthogonale mais sous un angle quelconque. De même, pourrait-on envisager une structure dans laquelle les pistes de l'une ou l'autre membrane, voire des deux, ne seraient pas rectilignes mais s'étendraient selon des lignes courbes. Il suffira, en effet, dans chacun de ces cas, que chaque réseau formé par de telles pistes soit relié à une résistance calibrée propre, du genre de celles mentionnées en se référant à la fig. 4, en des points de cette résistance caractéristiques de la position que l'on désire attribuer à chacune des pistes de l'un ou l'autre réseau. D'ailleurs, le revêtement ohmique constituant ces résistances pourrait, au besoin, s'étendre lui-aussi selon un profil non pas rectiligne mais courbe.

Les applications possibles du dispositif décrit pourront évidemment être différentes de celles envisagées jusqu'ici. C'est ainsi qu'un tel dispositif pourrait également être utilisé en association avec un appareil de radio ou de télévision, à titre de clavier de commande de tels appareils tant pour procéder à la sélection de stations différentes que pour effectuer un réglage progressif des divers autres paramètres de fonctionnement de ces appareils, tels que intensité du son, variation des basses et des aigües, contrôle d'une balance de son stéréo, intensité de la luminosité d'une image de télévision, du contraste, du dosage des couleurs fondamentales ou de la linéarité d'une telle image par exemple.

0145651

On pourrait également faire emploi d'un tel dispositif à titre de clavier d'un instrument musical, notamment à génération de sons par voie électronique, par exemple en attribuant aux pistes verticales successives l'identité des notes d'une gamme dans leur ordre habituel et sur plusieurs octaves adjacents et, aux pistes horizontales, l'identité de ces mêmes notes mais altérées d'un demi ton en plus (dièses) ou en moins (bémols) de piste à piste.

Les exemples simples qui viennent d'être cités montrent, à l'évidence, l'universalité d'emploi du dispositif selon l'invention, qui sera donc susceptible d'applications aussi nombreuses que variées.

REVENDICATIONS

1. Dispositif pour former des signaux caractéristiques de la position d'un point déterminé sur une surface, notamment par pression excercée au droit de ce point, comportant un premier substrat isolant (1) recouvrant la surface, un premier réseau de pistes conductrices (2) fixées sur une face de ce premier substrat, en position distante les unes des autres, un second substrat (5), en matériau souple et isolant, recouvrant la face du premier substrat portant lesdites pistes conductrices (2), un second réseau de pistes conductrices (6), fixées sur la face du second substrat située en regard du premier réseau de pistes (2), les pistes de ce second réseau étant distantes les unes des autres et s'étendant transversalement aux pistes du premier réseau, des organes (4) maintenant le second substrat dans une position tendue telle que chaque piste de son réseau demeure éloignée de n'importe laquelle parmi les pistes du premier réseau tant qu'aucune pression n'est excercée sur au moins une zone du dit second substrat, des moyens pour localiser les pistes desdits réseaux portées en contact mutuel, lorsque ledit second substrat est soumis à ladite pression, caractérisé par le fait que ces moyens comprennent:

- deux diviseurs ohmiques de tension ($R_{AX}$, $R_{AY}$) associés, l'un ($R_{AX}$), au premier des deux réseaux de pistes, et, l'autre ($R_{AY}$), au second de ces réseaux, chaque piste d'un réseau étant rattachée, par une extrémité, en un point du diviseur respectif tel que la résistance ohmique entre ce point et l'une des extrémités de ce diviseur soit caractéristique de la position occupée par cette piste au sein de son réseau,

- un premier et un second organes de commutation ($P_a$, $P_c$), associés respectivement au premier et au second diviseurs de tension et permettant de rattacher l'une des extrémités du diviseur correspondant soit à une source de potentiel de référence ($V_m$), dans un premier

état actif de commutation de chaque organe, soit à un moyen de collection ($L_2$, $M_e$) de signaux en potentiel, dans un second état actif de cet organe.

- un troisième organe de commutation ($P_b$) permettant soit de rattacher l'autre extrémité de l'un ou de l'autre diviseur à la masse (T), soit de l'en séparer,

- des moyens de commande périodique (CDE) desdits organes de commutation ($P_a$, $P_b$, $P_c$), agencés de manière telle que, d'une part, chacun desdits premier ($P_a$) et second ($P_c$) organes de commutation se trouve dans le premier de ses deux états actifs, lorsque l'autre de ces organes est dans le second de ces états, et vice-versa, et telle que, d'autre part, ledit troisième organe ($P_b$) rattache à la masse (T) la seconde extrémité de chaque diviseur, lorsque la première extrémité de celui-ci est rattachée à ladite source de potentiel de référence ($V_m$), ce troisième organe ($P_b$) interrompant cette liaison à la masse, dans le cas contraire,

le tout de manière que, à la suite d'une pression exercée en un point quelconque de ladite surface correspondant à une zone de contact galvanique entre au moins deux pistes appartenant chacune à un réseau distinct, ledit moyen de collection ($L_2$, $M_e$) reçoive, alternativement et en synchronisme avec l'arrivée desdits organes de commutation ($P_a$, $P_b$, $P_c$) dans l'un et l'autre états actifs, des signaux en potentiel, d'amplitude caractéristique, successivement en abscisse et en ordonnée, de la position desdites pistes et, partant, dudit point de la surface.

2. Dispositif selon la revendication 1, caractérisé par le fait que les diviseurs ohmiques ($R_{AX}$, $R_{AY}$) sont constitués chacun par un revêtement d'un matériau résistif apposé sur le premier (1) et sur le second (5) substrat, respectivement pour le premier ($R_{AX}$) et pour le second ($R_{AY}$) diviseurs, et recouvrant une partie de la longueur de l'une des extrémités des pistes (2;6) fixées sur le substrat correspondant.

3. Dispositif selon la revendication 2, caractérisé par le fait que les revêtements résistifs ($R_{AX}$, $R_{AY}$) associés aux deux réseaux de pistes sont disposés sur au moins une partie de la longueur du bord du champ embrassé par les pistes de ces réseaux.

4. Dispositif selon la revendication 3, caractérisé par le fait que les deux revêtements résistifs ($R_{AX}$, $R_{AY}$) s'étendent respectivement le long de deux côtés adjacents dudit champ, que chacune de leurs extrémités est reliée à des organes de commutation respectifs ($P_a$, $P_b$, $P_c$) par des connections bassement résistives, la connection associée à une première extrémité de chaque revêtement, proche de l'extrémité homologue de l'autre revêtement, étant reliée à l'une, respectivement à l'autre des deux bornes d'entrée du troisième organe de commutation ($P_b$), cette extrémité de revêtement constituant ainsi l'origine (O) du système de coordonnées, en abscisse et en ordonnée, formée par les deux réseaux de pistes, et la connection associée à la seconde extrémité de chaque revêtement étant reliée au premier organe de commutation ($P_a$), pour l'un des revêtements ($R_{AX}$), et au deuxième ($P_c$) de ces organes, pour l'autre ($R_{AY}$).

5. Dispositif selon la revendication 1, caractérisé par le fait que le premier substrat (1) est constitué par ladite surface.

6. Dispositif selon la revendication 1, caractérisé par le fait que le second substrat (5) est une membrane élastique, tendue au-dessus du premier substrat (1), que ce premier substrat présente une pluralité de saillies d'espacement (4) se dressant, de place en place, sur certaines pistes (2) du premier réseau, solidairement à celles-ci, et que ladite membrane (5) prend appui sur lesdites saillies par l'intermédiaire d'au moins certaines pistes (6) du second réseau, ces saillies subdivisant la surface de cette membrane en une pluralité d'éléments adjacents.

7. Dispositif selon la revendication 6, caractérisé par le fait que les saillies d'espacement (4) sont disposées en files et en rangs équidistants et orthogonaux, lesdits éléments de membrane présentant chacun une forme générale carrée.

8. Dispositif selon la revendication 6, caractérisé par le fait que les saillies d'espacement (4) revêtent la forme de masselottes de matière plastique, déposées par sérigraphie.

9. Dispositif selon la revendication 8, caractérisé par le fait que chaque masselotte présente une forme générale cubique.

10. Dispositif selon la revendication 9, caractérisé par le fait que l'arête du cube que forme chaque masselotte est de longueur inférieure à la largeur des pistes.

11. Dispositif selon la revendication 1, dans lequel chaque piste conductrice est formée par un revêtement d'oxyde métallique, caractérisé par le fait que ce revêtement est constitué par une portion d'un dépôt uniforme (R) recouvrant, à l'origine, toute la surface du substrat respectif (Q) et fractionné en pistes ($c_1$ à $c_n$) par usinage de rainures (r) dans l'épaisseur du dépôt, de profondeur telle que le fond desdites rainures soit constitué par une portion dudit substrat (Q).

12. Dispositif selon la revendication 11, caractérisé par le fait que les rainures sont obtenues par un usinage de nature chimique, de nature mécanique ou par un usinage au laser.

13. Dispositif selon les revendications 1 et 6, caractérisé par le fait que les substrats, les pistes conductrices et les saillies d'espacement sont transparents.

14. Dispositif selon les revendications 3 et 13, destiné à être superposé à un display et à apparaître dans une fenêtre d'un boîtier, caractérisé par le fait que lesdits revêtements résistifs sont masqués par les bords du boîtier délimitant ladite fenêtre.

FIG. 1

FIG. 2

FIG. 3

0145651

FIG. 4

FIG. 4a

FIG. 5